**Europäisches Patentamt**

**European Patent Office**

**Office européen des brevets**

(19)

(11) Veröffentlichungsnummer: **0 093 357**
**B1**

# EUROPÄISCHE PATENTSCHRIFT

(45) Veröffentlichungstag der Patentschrift:
**03.09.86**

(51) Int. Cl.⁴: **C 08 L 97/02,** C 08 G 18/76,
C 08 G 18/80, C 08 G 18/10

(21) Anmeldenummer: **83104000.1**

(22) Anmeldetag: **23.04.83**

(54) **Verfahren zum Verleimen von lignocellulosehaltigen Rohstoffen mit einem Präpolymeren auf Basis eines urethanmodifizierten Diphenylmethandiisocyanatgemisches.**

(30) Priorität: **03.05.82 DE 3216363**

(43) Veröffentlichungstag der Anmeldung:
**09.11.83 Patentblatt 83/45**

(45) Bekanntmachung des Hinweises auf die Patenterteilung:
**03.09.86 Patentblatt 86/36**

(84) Benannte Vertragsstaaten:
**AT BE DE FR IT SE**

(56) Entgegenhaltungen:
**DE-A-2 711 958**
**FR-A-2 286 844**
**FR-A-2 352 846**
**FR-A-2 380 309**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Horacek, Heinrich, Dr., Mozartstrasse 62, D-6710 Frankenthal (DE)**
Erfinder: **Wittmann, Otto, Max- Beckmann- Strasse 13b, D-6710 Frankenthal (DE)**
Erfinder: **Marx, Matthias, Dr., Seebacher Strasse 49, D-6702 Bad Duerkheim (DE)**
Erfinder: **Mayer, Johann, Dr., Am Mandelgarten 5, D-6713 Freinsheim (DE)**

**Beschreibung**

Die vorliegende Erfindung betrifft die Verwendung eines Präpolymeren auf Basis eines urethanmodifizierten Diphenylmethandiisocyanatgemisches (gegebenfalls in der Form einer wäßrigen Emulsion) als Bindemittel für lignocellulosehältige Rohstoffe.

Die Herstellung von Platten oder Formteilen aus lignocellulosehaltigen Fasern, Spänen oder Lagen unter Verwendung von Isocyanatgruppen enthaltenden Bindemitteln, speziell von solchen, die Di- und Polyisocyanate enthalten, ist bekannt (DE-PSen 2 109 686 und 2 711 958).

Solche Bindemittel sollen die Werkstoffe u.a. hinsichtlich ihrer Stabilität und ihrem Verhalten gegenüber Feuchtigkeit verbessern.

Es zeigt sich aber, daß bei der Verleimung z.B. von Holzspänen mit an sich bekannten Di- und Polyisocyanaten bzw. deren wäßrigen Emulsionen eine relativ schnell fortschreitende Umsetzung der Isocyanatgruppen mit Wasser stattfindet. Diese Umsetzung hat ihre Ursache einerseits in der unerwünschten, aber stets vorhandenen Holzrestfeuchte und andererseits in der Verwendung von wäßrigen Emulsionen. Der Effekt ist besonders ausgeprägt bei gleichzeitiger Verwendung von wäßrigen Leimharzen auf Basis von Amino- und Phenoplastharzen. Aufgrund ihres basischen Charakters erhöhen sie die Umsetzungsgeschwindigkeit der Isocyanatgruppen.

Daraus resultieren ein sehr enger Verarbeitungsspielraum, sowie eine häufig auftretende Streuung in den Festigkeitswerten der so verleizten Werkstoffe. Zusätzlich kann es bei betriebsbedingten Abstellungen oder Verzögerungen zu Feststoffausscheidungen im Bindemittel kommen, wodurch die Dosier- und Meßvorrichtungen blockiert werden und Verstopfungen in den Leitungen auftreten können.

Diese Nachteile lassen sich vermeiden, wenn man ein Präpolymeres auf Basis eines urethanmodifizierten Diphenylmethandiisocyanatgemisches, dessen Anteil an 2,4'-Diphenyl-methandiisocyanat bei 10 bis 75 Gew.% liegt, als Bindemittel verwendet.

Umsetzungsprodukte von Diphenylmethandiisocyanat, dessen Gehalt an 2,4'-Isomerem 20 bis 65 Gew.% beträgt, mit Propylenglykol und Polypropylenglykolen sind in der FR-PS 2 380 309 beschrieben.

Der Einsatz von 2,4'-Diphenylmethandiisocyanat ist schon für verschiedene Zwecke vorgeschlagen worden, beispielsweise für Elektroisolierungen, Lacke oder Fußbodenbeläge (DE-OSen 19 23 214, 24 47 625 und 26 23 346).

Im Zusammenhang mit Bindemitteln für lignocellulosehaltige Produkte gilt jedoch die technische Lehre, daß ein Anteil an 2,4'-Diphenylmethandiisocyanat, der größer als 8 Gew.% ist, zu ungenügenden Resultaten führt (DE-PS 2 711 958).

Entgegen dieser Anschauung wurde nun überraschenderweise gefunden, daß sich ein Isocyanatgruppen enthaltendes Präpolymeres auf Basis von Diphenylmethandiisocyanaten, das im wesentlichen aus einem urethanmodifizierten Diphenylmethandiisocyanatgemisch besteht, das eine Viskosität von 120 bis 1000 mPas bei 25°C und einen Isocyanatgehalt von 15 bis 30 Gew.% besitzt, ethalten durch Umsetzung eines Diphenylmethandiisocyanatgemisches, dessen Gehalt an 2,4'-Diphenyl-methandiisocyanat bei 10 bis 75 Gew.% liegt, mit 0,05 bis 0,5 OH-Äquivalentan eines Polyols je Äquivalent Isocyanatgruppen (gegebenfalls in der Form einer wäßrigen Emulsion vorteilhaft als Bindemittel für lignocellulosehaltige Rohstoffe verwenden läßt.

Die erfindungsgemäß zu verwendenden Diphenylmethandiisocyanatgemische enthalten im wesentlichen 2,4'- und 4,4'-Diphenylmethandiisocyanat mit einem vernachlässigbar kleinen Anteil an 2,2'-Isomerem. Der Gehalt an 2,4'-Diphenylmethan-diisocyanat liegt bei 10 bis 75 Gew.%, vorzugsweise 40 bis 60 Gew.%, bezogen auf das Gesamtgemisch. Daraus folgend ergibt sich ein Anteil an 4,4'-Isomerem von 25 bis 90 Gew.%, vorzugsweise 40 bis 60 Gew.%.

Gegebenenfalls können diese Diphenylmethandiisocyanatgemische bis zu 50 Gew.%, bezogen auf das Gesamtgemisch, an Polyphenyl-polymethylen-polyisocyanaten enthalten.

Die zur Urethanmodifizierung verwendeten Polyole besitzen im allgemeinen ein Molekulargewicht von 62 bis 2000. Sie enthalten meist 2 bis 8, vorzugsweise 2 bis 4 Hydroxylgruppen. Es handelt sich dabei hauptsächlich um Stoffe aus der Verbindungsklasse der nehrwertigen Alkohole, Polyetherpolyole oder Polyesterpolyole, wie Ethylenglykol, Propylenglykol-1,2 und -1,3, Glycerin, Butylenglykol-1,4 und -2,3, Di- und Triethylenglykol, Di- und Tripropylenglykol, Polyethylenglykol, Polypropylenglykol, Polybutylenglykol oder den aus den genannten Polyolen resultierenden Polyestern von Bernsteinsäure, Adipinsäure, Pimelinsäure, Sebacinsäure, Fumarsäure, Maleinsäure, Phthalsäure oder Terephthalsäure. Vorzugsweise wird Dipropylenglykol verwendet.

Die Urethanmodifizierung wird im allgemeinen bei Temperaturen von 20 bis 120°C durchgeführt. Dabei werden je Äquivalent Isocyanatgruppen 0,05 bis 0,5 Äquivalent eines Polyols eingesetzt.

Die so erzeugten Präpolymeren besitzen einen Isocyanatgehalt von 15 bis 30 Gew.%, vorzugsweise 20 bis 30 Gew.%. Ihre Viskosität bei 25°C liegt im Bereich von 120 bis 1000 mPas.

Die erfindungsgemäß anzuwendenden Präpolymeren können auch mit wäßrigen Leimharzen anderer chemischer Basis vermischt werden. Beispielsweise können dazu die an sich bekannten Melamin-Formaldehyd- und/oder Harnstoff-Formaldehyd- und/oder Harnstoff-Melamin-Formaldehyd- und/oder Melamin-Harnstoff-Formaldehyd-Phenol- und/oder Phenol-Formaldehyd- und/oder Phenol/Resorcin-Formaldehydharze in Anteilen von 10 bis 90 Gew.% eingesetzt werden.

Weiterhin lassen sich die erfindungsgemäß zu verwendenden Präpolymeren mit zusätzlichen, in der Praxis üblichen Hilfsmitteln (z.B. Emulgatoren oder Stabilisatoren) ausrüsten.

2

Lignocellulosehaltige Rohstoffe, die mit den genannten Präpolymeren verleimt werden können, sind z.B. Holz, Rinde, Kork, Flachs, Bambus, Sisal- oder Kokosfasern. Die Rohstoffe können dabei in Form von Granulaten, Spänen, Fasern oder Mehl vorliegen. Ihr Feuchtigkeitsgehalt beträgt 0 bis 20 Gew.%, vorzugsweise 3 bis 10 Gew.%.

Man setzt den lignocellulosehaltigen Rohstoffen 1 bis 10C Gew.%, vorzugsweise 2 bis 12 Gew.% bezogen auf die Masse der Rohstoffe, des Präpolymeren zu. Die Verpressung zu Platten oder Formkörpern erfolgt dabei üblicherweise unter der Einwirkung von Hitze und Druck. Analog lassen sich auch mehrlagige Platten oder Formteile aus Furnieren, Papieren oder Geweben herstellen. Auch die Herstellung mehrschichtiger Platten oder Formteile aus Furnieren und Streifen-, Stab- oder Stäbchenmittellagen läßt sich durchführen. Dabei werden die Furniere, wie oben beschrieben, mit Präpolymeren behandelt und anschließend mit den Mittellagen verpreßt. Man arbeitet hierbei üblicherweise bei höherem Druck und höheren Temperaturen. Der Anfangspreßdruck liegt in der Regel zwischen 5 und 50 bar; im Laufe des Preßvorganges fällt der Druck dann meist ab. Bevorzugte Preßtemperaturen sind 100 bis 250°C.

Die oben genannten Präpolymeren können auch generell als Klebstoff in der Holzindustrie verwendet werden, z.B. zum Aufleimen von Furnieren oder anderen Platten. Auch die Vergütung von lignocellulosehaltigen Werkstoffen, besonders von Vollholz, läßt sich durch Ausfüllen und Verkleben von inneren Hohlräumen mit dem Präpolymeren erreichen.

Durch die erfindungsgemäße Verwendung der Präpolymeren verlängert sich die potentielle Verarbeitungszeit um ca. 30 %; darunter ist der Zeitraum zu verstehen, in dem die behandelten lignocellulosehaltigen Rohstoffe ohne Beeinträchtigung der Endfestigkeit verarbeitet werden können.

Die eingangs erwähnte schnell fortschreitende Umsetzung der Isocyanatgruppen mit Wasser, speziell auch bei der zusätzlichen Verwendung von Amino- bzw. Phenoplastharzen, ist bei der erfindungsgemäßen Anwendung der Präpolymeren stark verlangsamt.

Aufgrund titrimetrischer Bestimmungen wurde gefunden, daß die wäßrigen Emulsionen der beim erfindungsgemäßen Verfahren verwendeten Präpolymeren nach 24 Stunden noch 90 bis 95 % ihres ursprünglichen Isocyanatgehaltes aufweisen. Bei Bindemitteln, die keinen oder nur einen geringen Anteil an 2,4'-Diphenylmethandiisocyanat aufweisen, lagen die Werte bei 27 bis 63 %.

Durch die Urethanmodifizierung von Diphenylmethandiisocyanat mit einem Anteil von 10 bis 75 Gew.% an 2,4'-Isomerem erhält man Präpolymere mit günstigen Viskositätswerten, die sich vorteilhaft auf Qualität und Dauerhaftigkeit der Verleimung auswirken. So lassen sich Platten oder Formteile von hoher mechanischer Qualität herstellen, ohne daß dabei die in der Praxis üblichen Preßzeiten überschritten werden.

**Beispiel 1**

Urethanmodifizierung

In einem heizbaren Kessel mit Rührer und Zulaufgefäß wurden unter Stickstoffspülung 90,2 Teile eines Diphenylmethandiisocyanatgemisches mit einem Anteil an 2,4'-Isomerem von 45 Gew.% vorgelegt und unter Rühren auf 90°C erwärmt. Dann ließ man innerhalb von 30 min 9,8 Teile Dipropylenglykol zulaufen. Anschließend wurde das Reaktionsgemisch noch 2 Stunden bei 90°C nachgerührt.

Nach dem Abkühlen wies das so hergestellte Präpolymere folgende Kenndaten auf:
Isocyanatgehalt: 24,7 %; Viskosität (25°C): 670 mPas

**Beispiele 2-6**

Analog wurden folgende Beispiele durchgeführt, wobei Menge und Zusammensetzung des Diphenylmethandiisocyanatgemisches unverändert blieb.
2. Polyol: 10 Teile Dipropylenglykol
Isocyanatgehalt: 23,3 Gew.%
Viskosität (25°C): 1000 mPas
3. Polyol: 8,0 Teile Dipropylenglykol
Isocyanatgehalt: 26,0 Gew.%
Viskosität (25°C): 250 mPas.
4. Polyol: 16 Teile Polypropylenglykol Molekulargew. = 2000
Isocyanatgehalt: 25,0 Gew.%
Viskosität (25°C): 120 mPas
5. Polyol: 14 Teile Polypropylenglykol Molekulargew. = 500
Isocyanatgehalt: 26,0 Gew.%
Viskosität (25°C): 120 mPas
6. Polyol: 7 Teile Trimethylolpropan
Isocyanatgehalt: 25,0 Gew.%
Viskosität (25°C): 200 mPas

Die Präpolymeren wurden in vorliegender Form oder als wäßrige Emulsionen eingesetzt. Dabei wurden die Emulsionen wie folgt hergestellt:

**Beispiel 7**

Herstellung einer 50%igen, wäßrigen Emulsion
Auf einem Ultra-Turrax-Rührer des Typs T 45 N (IKA-Werk) wurden jeweils 50 Teile urethanmodifizierte Isocyanatkomponente (wie in Bsp 1-6 hergestellt) 50 Teilen Wasser, das 9,23 Gew.% eines Polyetherpolyols und 0,77 Gew.% Polyvinylpyrrolidon enthielt, innerhalb von 10 min emulgiert.

**Bsp 8 (Verleimungsversuche)**

Mit den oben genannten Bindemitteln (ggfs als 50 % ige wäßrige Emulsion eingesetzt) wurden Verleimungsversuche an Nadelholzspänen durchgeführt:

**Beispiel 8**

Verleimungsversuche
Es wurden 5,5 kg Nadelholzspäne mit einer Spanfeuchte von 3 bis 6 Gew.% und jeweils 4,5 Gew.% des Bindemittels, bezogen auf die Masse der Nadelholzspäne, im Mischer zusammengegeben und verteilt.
In einer Schüttvorrichtung wurden die beaufschlagten Späne zu einer Platte geformt und in einer Heizpresse verdichtet. Bei einer Preßzeit von ca. 12 sec pro mm Plattendicke und einer Preßtemperatur von 180°C ergab sich eine mittlere Dichte der Platten von 650 kg/m$^3$, wobei die Plattendicke 18 mm betrug.
Folgende mechanischen Daten wurden ermittelt (bezogen auf einen NCO-Gehalt von 24 Gew.% im Bindemittel):

| Produkt aus Bsp Nr | Scherfestigkeit V 20[a] [N/mm$^2$] | Scherfestigkeit V 100[b] [N/mm$^2$] |
|---|---|---|
| 1 | 2,14 | 1,00 |
| 2 | 2,50 | 1,04 |
| 2 (50%ige wäßr.Emulsion) | 2,60 | 1,01 |
| 3 | 2,21 | 0,93 |
| 3 (50%ige wäßr.Emulsion) | 2,56 | 1,01 |
| Vergleichsprodukte [c] | | |
| A | 2,15 | 0,91 |
| A (50%ige wäßr. Emulsion) | 2,40 | 1,03 |
| B | 2,19 | 1,0 |

a) Scherfestigkeit V 20: Mittelwert aus 10 Einzelmessungen bestimmt an Prüfkörpern 5 X 5 cm; nach Klimatisierung bei 20°C und 60 % relativer Luftfeuchtigkeit.
b) Scherfestigkeit V 100: Mittelwert aus 10 Einzelmessungen bestimmt an Prüfkörpern 5 x 5 cm; nach 2-stündiger Lagerung in kochendem Wasser und 1-stündiger Kühlung in Wasser bei 20°C.
c) Bei den Vergleichsprodukten A und B handelt es sich um Diphenylmethandiisocyanatgemische mit einem Anteil an 2,4'-Isomerem von 7 bzw. 0 Gew.% und einer Viskosität von 270 bzw. 700 mPa.s bei 25°C.

**Patentansprüche**

1. Verwendung eines Isocyanatgruppen enthaltenden Präpolymeren auf Basis von Diphenylmethandiisocyanaten, das im wesentlichen aus einem urethanmodifizierten Diphenylmethandiisocyanatgemisch besteht, das eine Viskosität von 120 bis 1000 mPas bei 25°C und einen Isocyanatgehalt von 15 bis 30 Gew.% besitzt, erhältlich durch Umsetzung eines Diphenylmethandiisocyanatgemisches, dessen Gehalt an 2,4'-Diphenylmethandiisocyanat bei 10 bis 75 Gew.% liegt, mit 0,05 bis 0,5 OH-Äquivalenten eines Polyols je Äquivalent Isocyanatgruppen, (gegebenenfalls in der Form einer wäßrigen Emulsion) als Bindemittel für lignocellulosehaltige Rohstoffe

2. Verwendung des Isocyanatgruppen enthaltenden Präpolymeren gemäß Anspruch 1, dadurch gekennzeichnet, daß das Diphenylmethandiisocyanatgemisch bis zu 50 Gew.% Polyphenylpolymethylenpolyisocyanat enthält.

3. Verwendung des Isocyanatgruppen enthaltenden Präpolymeren gemäß den Ansprüchen 1 und 2, dadurch gekennzeichnet, daß die Polyole ein Molekulargewicht von 62 bis 2000 aufweisen.

4. Verwendung des Isocyanatgruppen enthaltenden Präpolymeren gemäß den Ansprüchen 1 bis 3, dadurch gekennzeichnet, daß das zur Urethanmodifizierung benutzte Polyol Dipropylenglykol ist.

5. Verwendung des Isocyanatgruppen enthaltenden Präpolymeren gemäß den Ansprüchen 1 bis 4, dadurch gekennzeichnet, daß das Präpolymere 10 bis 90 Gew.% weitere an sich bekannte Bindemittel auf Basis von Aminoplast- bzw. Phenoplastharzen enthält.

**Claims**

1. The use of a prepolymer which contains isocyanate groups, is based on diphenylmethane diisocyanates and consists essentially of a urethane-modified diphenylmethane diisocyanate mixture having a viscosity of from 120 to 1000 mPas at 25°C and an isocyanate content of from 15 to 30% by weight, and is obtainable by reacting a diphenylmethane diisocyanate mixture, containing from 10 to 75% by weight of 2,4'-diphenylmethane diisocyanate, with 0.05 to 0.5 OH equivalents of a polyol per equivalent of isocyanate groups, which prepolymer may be in the form of an aqueous emulsion, as binder for raw materials containing lignocellulose.

2. The use of a prepolymer which contains isocyanate groups, as claimed in claim 1, wherein the diphenylmethane diisocyanate mixture contains up to 50% by weight of polyphenyl polymethylene polyisocyanate.

3. The use of a prepolymer which contains isocyanate groups, as claimed in claims 1 and 2, wherein the polyol has a molecular weight of from 62 to 2000.

4. The use of a prepolymer which contains isocyanate groups, as claimed in claims 1 to 3, wherein the polyol used for urethane modification is dipropylene glycol.

5. The use of a prepolymer which contains isocyanate groups, as claimed in claims 1 to 4, wherein the prepolymer contains from 10 to 90% by weight of further conventional binders based on amino or phenolic resins.

**Revendications**

1.- Utilisation d'un prépolymère contenant des groupes isocyanate à base de diphénylméthane-diisocyanates, ce prépolymère consistant essentiellement en un mélange de diphénylméthane-diisocyanates modifié par de l'uréthanne, ayant une viscosité de 120 à 1000 mPa à 25°C et une teneur en isocyanate de 15 à 30% en poids, et pouvant être obtenu par réaction d'un mélange de diphénylméthane-diisocyanates, dont la teneur en 2,4'-diphénylméthane-diisocyanate est comprise entre 10 et 75% en poids, avec 0,05 à 0,5 équivalent OH d'un polyol par équivalent des groupes isocyanate, comme colle (éventuellement sous forme d'une emulsion aqueuse) pour des matières brutes contenant de la lignocellulose.

2.- Utilisation du prépolymère contenant des groupes isocyanate suivant la revendication 1, caractérisée en ce que le mélange de diphénylméthane-diisocyanates contient jusqu'à 50% en poids de polyphényl-polyméthylène-polyisocyanate.

3.- Utilisation du prépolymère contenant des groupes isocyanate suivant la revendication 1 ou 2, caractérisée en ce que les polyols présentent un poids moléculaire de 62 à 2000.

4.- Utilisation du prépolymère contenant des groupes isocyanate suivant l'une quelconque des revendications 1 à 3, caractérisée en ce que le polyol utilisé pour la modification par de l'uréthanne est le dipropylène glycol.

5.- Utilisation du prépolymère contenant des groupes isocyanate suivant l'une quelconque des revendications 1 à 4, caractérisée en ce que le prépolymère contient 10 à 90% en poids d'autres colles connues en soi à base de résines aminoplastes ou phénoplastes.